(19) Europäisches Patentamt
European Patent Office
Office européen des brevets

(11) **EP 0 931 217 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.$^7$: **F02P 5/04**, F02P 5/15

(21) Anmeldenummer: **98931909.0**

(22) Anmeldetag: **11.04.1998**

(86) Internationale Anmeldenummer:
**PCT/DE1998/001045**

(87) Internationale Veröffentlichungsnummer:
**WO 1998/046878 (22.10.1998 Gazette 1998/42)**

(54) **VERFAHREN UND VORRICHTUNG ZUR STEUERUNG EINER BRENNKRAFTMASCHINE**

METHOD AND DEVICE FOR REGULATING AN INTERNAL COMBUSTION ENGINE

PROCEDE ET DISPOSITIF POUR LA REGULATION D'UN MOTEUR A COMBUSTION INTERNE

(84) Benannte Vertragsstaaten:
**DE FR IT**

(30) Priorität: **16.04.1997 DE 19715774**

(43) Veröffentlichungstag der Anmeldung:
**28.07.1999 Patentblatt 1999/30**

(73) Patentinhaber: **ROBERT BOSCH GMBH**
**70442 Stuttgart (DE)**

(72) Erfinder:
• **QIU, Qiang**
**D-71254 Ditzingen (DE)**
• **NICOLAOU, Michael**
**D-64372 Ober-Ramstadt (DE)**
• **NEUBERT, Jürgen**
**D-70469 Stuttgart (DE)**
• **HESS, Werner**
**D-70499 Stuttgart (DE)**

(56) Entgegenhaltungen:
**DE-A- 4 407 475      US-A- 5 253 623**
**US-A- 5 445 124      US-A- 5 575 257**

**Beschreibung**

Stand der Technik

Die Erfindung betrifft ein Verfahren und eine Vorrichtung zur Steuerung einer Brennkraftmaschine gemäß den Oberbegriffen der unabhängigen Patentansprüche.

Aus der US 5,445, 124 ist eine Leerlaufregelung mit Sollmomentenvorgabe bekannt, bei der ein gefordertes Drehmoment zur Erzielung einer Solldrehzahl berechnet wird. Zündzeitpunkt und Luftzufuhr zur Einstellung des gewünschten Drehmomentes werden berechnet.

Ein derartiges Verfahren bzw. eine derartige Vorrichtung ist aus der DE 195 18 813 C1 bekannt. Dort wird im Rahmen einer Motorschleppmomentenregelung die Umsetzung eines von dieser Regelung ermittelten Sollmotormomentenwerts in einen Sollzündwinkel und in eine Einstellung eines zur Steuerung der Leerlaufluft der Brennkraftmaschine dienendes Stellelement beschrieben.

Aus der DE-A 44 07 475 ist ein Steuersystem für eine Brennkraftmaschine mit Momentenstruktur bekannt. Abhängig von einem Sollmomentenwert, der beispielsweise vom Fahrer oder von externen Systeme wie einer Antriebsschlupfregelung bzw. einer Getriebesteuerung, etc. vorgegeben wird, wird durch Einstellung der Luftzufuhr zur Brennkraftmaschine über eine elektrisch steuerbare Drosselklappe, durch Beeinflussung des Zündwinkels und ggf. der Kraftstoffzufuhr eine Annäherung des Istmoments der Brennkraftmaschine an den Sollmomentenwert erreicht. Vorteile einer solchen momentenbasierten Motorsteuerung finden sich hinsichtlich der Abgasqualität, der Einbindung dieser externen Eingriffe, der Schnelligkeit der Eingriffe und des Vorhalts einer bestimmten Momentenreserve zur schnellen Momentenerhöhung in bestimmten Betriebszuständen.

Es ist Aufgabe der Erfindung, diese Vorteile einer momentenbasierten Motorsteuerung auch bei herkömmlichen Systemen, in denen lediglich die Leerlaufluft zur Brennkraftmaschine elektrisch beeinflußbar ist, zu erreichen. Ferner ist Aufgabe, bei Systemen mit elektronischem Gaspedal eine geeignete Arbeitspunkteinstellung der Brennkraftmaschine zu erreichen, mit der alle Momentenanforderungen mit zufriedenstellender Dynamik realisiert werden können.

Dies wird durch die kennzeichnenden Merkmale der unabhängigen Patentansprüche erreicht.

Aus der DE-A 195 23 898 ist eine Antiruckelfunktion bekannt, bei der abhängig von der Abweichung der Istdrehzahl von einer Modelldrehzahl Schwingungen isoliert werden, daraus eine zur Reduzierung notwendige Momentenänderung bestimmt wird und und in eine Zündwinkeländerung umgesetzt wird.

Vorteile der Erfindung

Die erfindungsgemäße Vorgehensweise erlaubt eine momentenbasierte Motorsteuerung auch bei herkömmlichen Steuersystemen ohne elektronisches Gaspedal, das heißt mit herkömmlicher mechanischer Verbindung zwischen Fahrpedal und Drosselklappe. Besonders vorteilhaft ist, daß die Vorteile der momentenbasierten Motorsteuerung hinsichtlich Abgas, Einbindung externer Eingriffe wie Antriebsschlupfregelung, Getriebeschaltung, etc., Schnelligkeit der Eingriffe und Vorhalt einer bestimmten Momentenreserve in bestimmten Betriebszuständen genutzt werden können.

Besonders vorteilhaft ist, daß auch bei derartigen herkömmlichen Steuerungskonzepten durch die Momentenkoordination an einer zentralen Stelle eine bessere Arbeitspunkteinstellung und eine bessere Dynamik erreicht wird.

Eine schnelle Momentenerniedrigung wird durch die Dynamik der Zündwinkelverstellung erreicht. Eine fahrerunabhängige, situationsbedingte Momentenerhöhung wird durch die Dynamik des Leerlaufstellers vorgegeben. Durch die Bildung sogenannter Reservemomente wird der Arbeitspunkt stationär verschoben, so daß alle Momentenanforderungen mit ausreichender Dynamik realisiert werden können.

Besonders vorteilhaft ist, daß die Vorgehensweise zur Arbeitspunkteinstellung auch bei Systemen mit elektronischen Gaspedal eingesetzt werden kann.

Vorteilhaft ist ferner, daß beim Übergang vom Leerlauf in den Betrieb außerhalb des Leerlaufs und umgekehrt ein Sprung in der Zündwinkeleinstellung wirksam vermieden wird.

Ein weiterer Vorteil ergibt sich daraus, daß kein Lufteingriff vorgenommen und die Drehzahl des Motors stabil gehalten wird, solange die Momentenänderung sich nur über den Zündwinkel realisieren läßt. Erst eine Momentenanforderung über einen dieser Grenzwerte hinaus führt zu einer Veränderung der Luftzufuhr. Eine stabileres Betriebsverhalten und ein verbesserter Fahrkomfort ist die Folge.

Weitere Vorteile ergeben sich aus der nachfolgenden Beschreibung von Ausführungsbeispielen bzw. aus den abhängigen Patentansprüchen.

Zeichnung

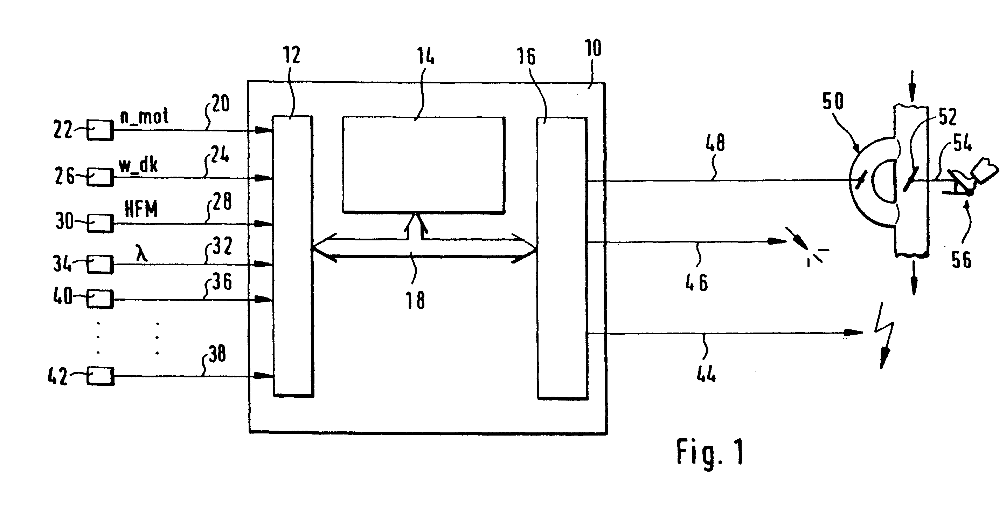

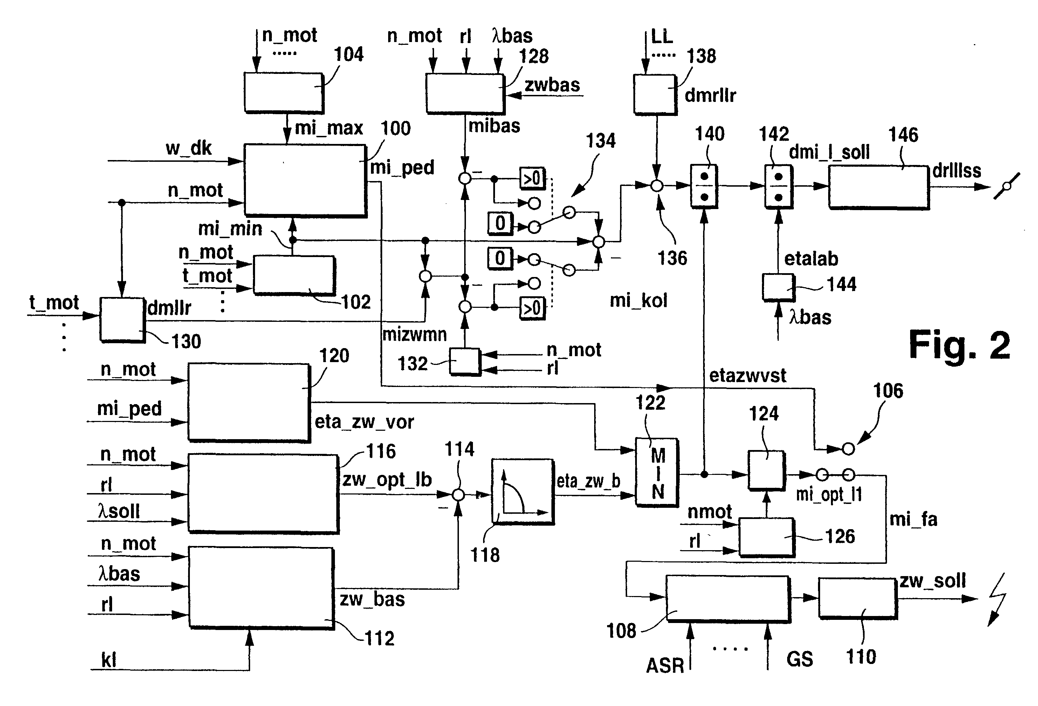

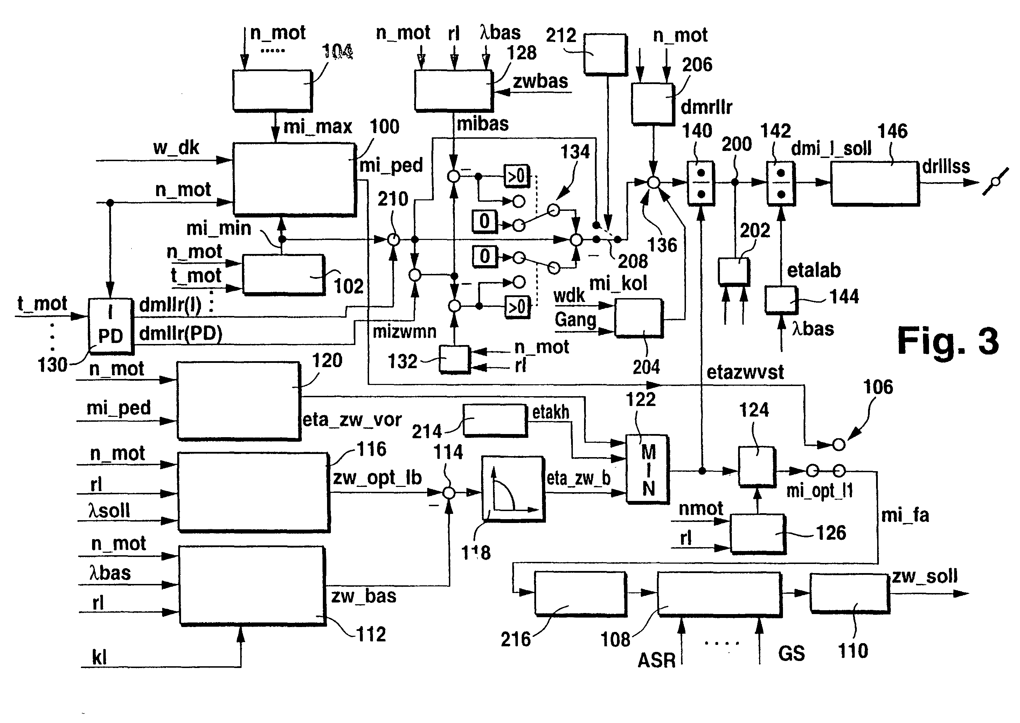

Die Erfindung wird nachstehend anhand der in der Zeichnung dargestellten Ausführungsformen näher erläutert. Figur 1 zeigt eine Ausführungsform des Steuersystems für eine Brennkraftmaschine, bei welchem die in Figur 2 anhand eines Ablaufdiagramms dargestellte Vorgehensweise eingesetzt wird. Figur 3 zeigt ein weiteres Ablaufdiagramm, welches auf das Ablaufdiagramm der Figur 2 aufbaut und Ergänzungen zeigt, die einzeln oder in beliebiger Kombination eingesetzt werden können.

Beschreibung von Ausführungsbeispielen

Figur 1 zeigt ein bevorzugtes Ausführungsbeispiel eines Steuersystems für eine Brennkraftmaschine, welches eine elektronische Steuereinheit 10 aufweist. Diese umfaßt eine Eingangsschaltung 12, wenigstens einen Mikrocomputer 14 und eine Ausgangsschaltung 16. Ein Kommunikationssystem 18 verbindet Eingangsschaltung 12, den wenigstens einen Mikrocomputer 14 und die Ausgangsschaltung 16 zum Daten- und Informationsaustausch. An die Eingangsschaltung 12 sind verschiedene Eingangsleitungen angeschlossen, über die von entsprechenden Meßeinrichtungen die zur Steuerung der Brennkraftmaschine notwendigen Betriebsgrößen zugeführt werden. In einem bevorzugten Ausführungsbeispiel wird über die Eingangsleitung 20 von der Meßeinrichtung 22 die Drehzahl N_mot der Brennkraftmaschine zugeführt, über die Leitung 24 von der Meßeinrichtung 26 die Stellung w_dk der vom Fahrer betätigbaren Drosselklappe, über die Leitung 28 von der Meßeinrichtung 30 ein Maß HFM für den Luftstrom zur Brennkraftmaschine oder den Saugrohrdruck, über die Leitung 32 von der Meßeinrichtung 34 ein Maß λ_ist für die Abgaszusammensetzung. Ferner sind Eingangsleitungen 36 bis 38 vorgesehen, die von den Meßeinrichtungen 40 bis 42 erfaßten weiteren Betriebsgrößen wie Motortemperatur t_mot, Eingriffssignale von externen Systemen wie Getriebesteuerung, Antriebsschlupfregelung, Fahrdynamikregelung, etc., den Status von Nebenverbrauchern, wie einer Klimaanlage, etc., wenigstens ein, eine klopfende Verbrennung repräsentierendes Signal K1, etc. zuführen. An die Ausgangsschaltung 16 sind Ausgangsleitungen angeschlossen, über welche die beeinflußbaren Leistungsparameter der Brennkraftmaschine gesteuert werden. In Figur 1 ist eine Ausgangsleitung 44 zur Steuerung des Zündzeitpunktes, eine Ausgangsleitung 46 zur Steuerung der Kraftstoffeinspritzung in die verschiedenen Zylinder symbolisiert sowie eine Ausgangsleitung 48, über die ein Stellventil 50 zur Beeinflussung der Luftzufuhr zur Brennkraftmaschine, im bevorzugten Ausführungsbeispiel der Leerlaufluft, betätigt wird. Das Steuerventil 50 ist im bevorzugten Ausführungsbeispiel in einem Umgehungskanal der Hauptdrosselklappe 52 angeordnet, welche in herkömmlicher Weise über eine mechanische Verbindung 54, z.B. über einen Bowenzug, vom Fahrer durch Betätigen des Fahrpedals 56 verstellt wird. Ferner wird in einem bevorzugten Ausführungsbeispiel die Stellung des Leerlaufstellers erfaßt.

Ausgehend von den Eingangsgrößen werden in der Steuereinrichtung 10, dort im wenigstens einen Mikrocomputer 14, Steuergrößen zur Einstellung der Leistungsparameter gebildet. Dabei findet im bevorzugten Ausführungsbeispiel in und außerhalb des Leerlaufs eine Positionierung des Steuerventils 50, eine Berechnung der in jeden Zylinder einzuspritzenden Kraftstoffmenge sowie die Berechnung des an jedem Zylinder einzustellenden Zündzeitpunkts statt. Die konkrete Vorgehensweise zur der Berechnung der Leistungsparameter, insbesondere zur Positionierung des Steuerventils 50 und zur Einstellung der Zündzeitpunkte, ist in einem bevorzugten Ausführungsbeispiel anhand des Blockschaltbilds von Figur 2 skizziert.

Die Blockschaltbilddarstellung gemäß Figur 2 wurde aus Übersichtlichkeitsgründen gewählt. In einer bevorzugten Realisierung wird die Motorsteuerung wenigstens ein im wenigstens einen Mikrocomputers ablaufendes Programm durchgeführt. Die Blockschaltbilddarstellung nach Figur 2 repräsentiert die Struktur dieses Programms, wobei die einzelnen Blöcke die entsprechenden Programmteile, Kennlinien, Kennfeldern, Tabellen, etc. bezeichnen, während die Verbindungslinien das Zusammenwirken dieser Programmelemente darstellen.

Die in Figur 2 dargestellte momentenbasierte Motorsteuerung weist als wesentliche Steuergrößen den Zündwinkel zw_soll und die Füllung über den Leerlaufsteller drlllss auf. Darüber hinaus werden in anderen Ausführungsbeispielen die Kraftstoffzufuhr zu den einzelnen Zylindern beeinflußt, indem die Kraftstoffzufuhr zu einzelnen Zylindern vollständig unterbunden wird und/oder indem die vorgegebene Gemischzusammensetzung im Sinne einer Momentenänderung beeinflußt wird.

Zur Motorsteuerung wird die Motordrehzahl n_mot und als Maß für die Fahrpedalbetätigung der Drosselklappenwinkel w_dk zugeführt. Aus diesen beiden Größen wird in einem Pedalmomentbilder 100 das sogenannte indizierte Pedalmoment mi_ped berechnet. Diese Berechnung erfolgt nach Maßgabe eines vorgegebenen Kennfeldes, aus welchem in Abhängigkeit der Drosselklappenstellung und der Motordrehzahl ein Momentenwert ausgelesen wird, der wiederum unter Berücksichtigung eines minimal notwendigen indizierten Moments mi_min und eines maximal möglichen indizierten Moments mi_max zum Pedalmoment mi_ped umgerechnet wird. Im bevorzugten Ausführungsbeispiel wird das aus dem Kennfeld ausgelesene Moment auf den Minimal- und Maximalwert bezogen. Dies erfolgt im bevorzugten Ausführungsbeispiel auf der Basis der folgenden Gleichung:

$$mi\_ped = f(w\_dk, n\_mot) * (mi\_max - mi\_min) + mi\_min \qquad (1)$$

Die minimalen und maximalen indizierten Momente sind betriebspunktabhängig. Daher ist zur Bestimmung des minimal notwendigen indizierten Moments mi_min ein Minimalwertbilder 102 (z.B. Kennlinien, Kennfelder) vorgesehen, der das minimal notwendige indizierte Moment wenigstens in Abhängigkeit von Motordrehzahl und Motortemperatur, ggf. ergänzend auf der Basis des Status von Nebenverbrauchern, der Motorlast, etc., ermittelt. Das minimal notwendige indizierte Moment stellt dabei das indizierte Moment dar, das zur Überwindung der internen Verluste der Brennkraftmaschine sowie zum Betreiben von Nebenaggregaten, wie einer Klimaanlage, notwendig ist, ohne daß die Brennkraftmaschine Leistung bzw. Moment an den Triebstrang abgibt. Ferner ist ein Maximalwertbilder 104 (z.B. Kennlinie oder Kennfeld) vorgesehen, welcher wenigstens abhängig von der Motordrehzahl das maximal mögliche indizierte Moment mi_max berechnet. Dieses stellt das indizierte Moment dar, das im aktuellen Betriebspunkt mit Blick auf Motorschutz und Motorleistungsgrenzen erzeugt werden kann. Das berechnete Pedalmoment mi_ped ist dann zwischen dem minimal notwendigen und einem maximal möglichen indizierten Moment im aktuellen Betriebspunkt veränderlich. Unter indiziertem Moment wird dabei das Moment der Hochdruckphase verstanden.

Befindet sich die Brennkraftmaschine im Leerlaufzustand, das heißt wenn zumindest die Drosselklappe geschlossen ist oder sich nahe ihrer geschlossenen Stellung befindet und/oder eine Motordrehzahlbedingung erfüllt ist, ist ein Schalter 106 derart eingestellt, daß das Pedalmoment mi_ped als Fahrerwunschmoment mi_fa zu einem Momenteneingriffskoordinator 108 geführt wird. Dem Momenteneingriffskoordinator 108 wird neben dem indizierten Fahrerwunschmoment mi_fa, welches im Leerlauf gleich dem Pedalmoment mi_ped ist, die entsprechenden Sollmomentenwerte externer Eingriffe, wie beispielsweise einer Antriebsschlupfregelung, einer Getriebesteuerung, einer Fahrdynamikregelung, etc., und/oder begrenzende Eingriffe wie einer Drehzahlbegrenzung, Fahrgeschwindigkeitsbegrenzung, etc. zugeführt. Der Momentenkoordinator wählt nach einer vorgegebenen Strategie den einzustellenden Momentenwert aus. Z.B. wird bei begrenzenden Eingriffe der jeweils kleinere Wert ausgewählt, ebenso wie bei der Koordination des Sollwertes der Antriebsschlupfregelung und des Fahrerwunschmoments. Der Koordinator 108 entspricht für diesen Fall einer Minimalwertauswahl. Ausgangssignal des Koordinators 108 ist ein Momentensollwert mi_soll, der in dem Sollzündwinkelbilder 110 in einen Sollzündwinkel zw_soll umgerechnet wird. Die entsprechende Vorgehensweise unter Berücksichtigung von optimalen Zündwinkel und optimalen Moment ist z.B. in der eingangs genannten DE 195 18 813 C1 beschrieben. Der berechnete Sollzündwinkel wird dann durch entsprechende Verschiebung des Zündzeitpunkts bzw. des Zündwinkels an den einzelnen Zylinder eingestellt. Innerhalb des Leerlaufs wird der Zündwinkel im wesentlichen durch das minimale, indizierte Moment eingestellt.

Außerhalb des Leerlaufs, in dem der Schalter auf der in Figur 2 gezeigten Stellung steht, wird der Arbeitspunkt der Brennkraftmaschine über den Zündwinkel aus einer Minimalauswahl zwischen einem Basiszündwinkelwirkungsgrad eta_zw_bas und einem Vorgabezündwinkelwirkungsgrad eta_zw_vor festgelegt. Zu diesem Zweck ist ein Basiszündwinkelbilder 112 vorgesehen, der in herkömmlicher Weise nach Maßgabe eines Kennfeldes aus Motordrehzahl n_mot und relativer Zylinderfüllung rl (Last), ggf. unter Berücksichtigung der Basiseinstellung der Gemischzusammensetzung (λ_bas, Gemischzusammensetzung ohne externen Eingriff, in der Regel λ=1) einen Basiszündwinkel zw_bas auswählt, der noch im Rahmen einer Klopfregelung korrigiert wird. Dieser Basiszündwinkel zw_bas stellt den Zündwinkel der Brennkraftmaschine im aktuellen Arbeitspunkt ohne externen Eingriff dar. Er wird in einer Verknüpfungsstelle 114 mit einem aus einem anderen Zündwinkelbilder 116 ausgelesenen optimalem Zündwinkel zw_opt_1b subtrahiert. Der optimale Zündwinkel wird dabei aus wenigstens einem Kennfeld abhängig von Motordrehzahl n_mot und Motorlast rl und ggf abhängig von sollwert λ_soll für die Gemischzusammensetzung (in der Regel 1) ausgelesen. Er stellt den Zündwinkel mit dem höchsten Wirkungsgrad unter den aktuellen Betriebsbedingungen dar.

Die Differenz zwischen diesen beiden Zündwinkelwerten wird dann einer Kennlinie 118 zugeführt, in der die Abweichung vom optimalen Wirkungsgrad eta_zw_bas abhängig von der Differenz abgelegt ist. eta_zw_bas ist 1, wenn die Differenz Null ist, d.h. der Basiszündwinkel dem optimalen entspricht. Ferner ist ein Vorgabewertbilder 120 vorgesehen, welcher einen vorgabezündwinkelwirkungsgrad eta_zw_vor abgibt. In einem bevorzugten Ausführungsbeispiel stellt der Bilder 120 ein Kennfeld dar, in dem der Vorgabezündwinkelwirkungsgrad z.B. in Abhängigkeit von Motordrehzahl n_mot und Pedalmoment mi_ped abgelegt ist. Dieser Vorgabewirkungsgrad dient als Vorgabegröße z. B. für bestimmte Betriebsbereiche wie Start, Katheizen, etc. und ist so bemessen, daß sich beim Übergang vom Leerlauf in den Betrieb außerhalb des Leerlaufs und umgekehrt kein Sprung in der Zündwinkeleinstellung sich ergibt. Der Vorgabezündwinkelwirkungsgrad und der Basiszündwinkelwirkungsgrad werden in einer Minimalwertauswahlstufe 122 miteinander verglichen und der jeweils kleinere Wert, das heißt der jeweils schlechtere Wirkungsgrad, als Vorsteuerzündwinkelwirkungsgrad eta_zw_vst ausgegeben. In einem Multiplizierelement 124 wird das optimale indizierte Moment mi_opt_11 mit dem Wirkungsgrad eta_zw_vst multipliziert und als Fahrerwunschmoment mi_fa an den Momentenkoordinator 108 abgegeben. Das optimale indizierte Moment mi_opt_11 wird dabei in einem Momentenbildner 126 wenigstens in Abhängigkeit von Motordrehzahl n_mot und relativer Zylinderfüllung rl (Last) gebildet. Es stellt das maximale indizierte Moment dar, das sich bei der gegebenen Füllung und Drehzahl ergibt, wenn die Brennkraftmaschine mit stöchiometrischen Gemisch (λ=1) und mit optimalen Zündwinkel zw_opt betrieben wird.

Durch die Vorgabe der Zündwinkelwirkungsgrade und Einstellen des Zündwinkels entsprechend dieser Wirkungsgrade außerhalb des Leerlaufs wird ein Zündwinkelarbeitspunkt festgesetzt, der es erlaubt, eine schnelle Reaktion auf eine Änderung der Momentenwünsche sowohl in Richtung auf eine Momentenerhöhung als auch in Richtung auf eine Momentenreduzierung vorzunehmen.

Die Einstellung des Luftpfades über den Leerlaufsteller ergibt sich wie folgt. Das wenigstens in Abhängigkeit von Motordrehzahl n_mot und Motortemperatur t_mot gebildete minimal notwendige indizierte Moment mi_min stellt ein indiziertes Moment für den Luftpfad mi_kol dar. Dieses wird unter Berücksichtigung eines Korrekturmoments dmllr einer Leerlaufregelung, eines indizierten Basismoments mibas, das heißt des Istmoments ohne externen Momenteneingriff, und des indizierten Moments beim spätestmöglichen Zündwinkel mizwmn gebildet. Das indizierte Basismoment mibas wird dabei anhand von Kennfeldern und Korrekturen im Basismomentenbildner 128 aus Motordrehzahl n_mot, relativer Zylinderfüllung rl, Basislamdawert λ_bas und Basiszündwinkel zw_bas gebildet. Der Eingriff des Leerlaufreglers dmllr wird vom Leerlaufregler 130 abhängig von der Motordrehzahl Nmot und einem von Betriebsgrößen wie Motortemperatur abhängigen Sollwerts im Rahmen eines Drehzahlregelkreises ermittelt. Das indizierte Moment beim spätestmöglichen Zündwinkel mizwmn wird in einem entsprechenden Element 132 aus einem Kennfeld nach Maßgabe des aktuellen Betriebspunktes, der durch Motordrehzahl n_mot und relativer Zylinderfüllung rl gegeben wird, ausgelesen. In einer Logik 134 wird das indizierte Moment mi_kol gebildet. Dieses ändert sich nur dann, wenn die Summe von minimalem Moment mi_min und vom Deltamoment dmllr des Leerlaufreglers größer ist als das indizierte Basismoment mibas (maximal mögliches Moment beim aktuellen Arbeitspunkt) oder kleiner ist als das für den aktuellen Arbeitspunkt minimal einstellbares Moment mizwmn ist. Dies wird durch die Auswahllogik 134 erreicht, die sich wie folgt darstellen läßt:

Wenn

$$(mi\_min + dmllr) - mibas > 0,$$

dann

$$mi\_kol = mi\_min + ((mi\_min + dmllr) - mibas);$$

Wenn

$$(mizwmn - (mi\_min + dmllr)) > 0,$$

dann

$$mi\_kol = mi\_min - ((mizwmn - (mi\_min + dmllr)).$$

Durch diese Maßnahme wird in vorteilhafter Weise eine Stabilisierung des Lufteingriffs erreicht. Solange die geforderte Momentenänderung zwischen den Werten mibas und mizwmn sich bewegt, wird kein Lufteingriff vorgenommen und die Drehzahl des Motors stabil gehalten. Die Momentenänderung wird nur über den Zündwinkel realisiert. Führt eine Momentenanforderung über einen dieser Grenzwerte hinaus, wird die Luftzufuhr entsprechend verändert.

Das in der Auswahllogik 134 ermittelte indizierte Moment mi_kol wird in einem Additionselement 136 mit dem Reservemoment dmrllr beaufschlagt. Dieses ist in Tabellen, Kennlinien oder Kennfelder 138 abhängig vom jeweiligen Betriebszustand abgelegt. Beispielsweise wird das über den Luftpfad eingestellte Moment in Betriebszuständen wie Leerlauf, Katheizen, Start, etc. gegenüber dem Normalwert erhöht, das heißt, ein Änderungsbetrag dmrllr auf das indizierte Moment mi_kol aufaddiert. Durch die erhöhte Füllung stellt sich der Zündwinkel zw_soll automatisch nach spät (momentenverringernd). Auf diese Weise kann in diesen Betriebszuständen eine schnelle Momentenreaktion auch im Sinne einer Erhöhung des Drehmoments der Brennkraftmaschine durch entsprechende Frühziehung des Zündwinkels erfolgen. Das um das Reservemoment korrigierte indizierte Moment wird in der Divisionsstelle 140 durch den Vorsteuerzündwinkelwirkungsgrad eta_zw_vst dividiert. Durch diese Maßnahme wird die in dem Zündwinkelpfad vorgenommene Verschlechterung der Wirkungsgradeinstellung im Luftpfad dergestalt berücksichtigt, daß das über die Füllung eingestellt Moment sich genau um den Betrag verändert, um den sich das über den Zündwinkel eingestellte Moment verändert hat. Das in der Brennkraftmaschine indizierte Drehmoment bleibt also im wesentlichen gleich. Der auf diese Weise ermittelte Momentensollwert wird in einer weiteren Divisionsstufe 142 mit einem Zündwinkelwirkungsgrad etalab bezogen auf eine stöchiometrische Gemischzusammensetzung (λ=1) dividiert. Dieser Wirkungsgrad stellt die Abweichung vom optimalen indizierten Moment durch eine von dem stöchiometrischen Gemisch abweichenden Zusammensetzung dar und ist als Kennlinie abhängig von λ_ist abgelegt. In der Wirkungsgradkennlinie 144 wird abhängig von der aktuellen Gemischzusammensetzung λ_ist der Wirkungsgradwert etalam ausgelesen und in der Divisionsstufe 142 mit dem Sollwert verbunden. Ergebnis ist ein Sollwert für eine Momentenänderung dmi_1_soll über den Luftpfad, welcher durch Ansteuern des Leerlaufstellers eingestellt wird. Zu diesem Zweck wird in einem Sollfüllungsbildner 146 der Sollwert wenigstens unter Berücksichtigung der Motordrehzahl n_mot z.B. nach Maßgabe eines Kennfeldes oder eine Kennlinie in eine Füllungsänderung, das heißt eine Stellungsänderung des Leerlaufstellers drlllss umgesetzt. Diese Füllungsänderung wird dann durch Ansteuern des Leerlaufstellers z.B. im Rahmen eines Stellungsregelkreises, eines Luftmassenregelkreises, eines Stromregelkreises, eines Füllungsregelkreises oder durch reine Steuerung eingestellt.

Die erfindungsgemäße Lösung wurde anhand eines bevorzugten Ausführungsbeispiel beschrieben, bei dem zur Einstellung der Luftzufuhr nur ein Leerlaufsteller zur Verfügung steht. Die Vorgabe eines Zündwinkelarbeitspunkts weist jedoch auch Vorteile bei Steuersystemen auf, bei denen die Luftzufuhr über den gesamten Bereich abhängig vom Fahrerwunsch auf elektrischem Wege eingestellt wird. Daher wird auch in einer solchen Ausführung ein Zündwinkelwirkungsgrad zumindest in bestimmten Betriebszuständen vorgegeben, der dann über den Zündwinkel eingestellt und zur Aufrechterhaltung des Moments bei der Lufteinstellung berücksichtigt wird.

Ferner wurde aus Übersichtlichkeitsgründen die Einflußgrößen zur Motorsteuerung im Rahmen des bevorzugten Ausführungsbeispiels auf Zündwinkel und Luft beschränkt. In einem anderen Ausführungsbeispiel ist ferner auch eine Beeinflussung der Kraftstoffzufuhr durch Ausblendung und/oder Veränderung der Gemischzusammensetzung vorgenommen. In diesem Fall wird die erfindungsgemäße Zündwinkeleinstellung in entsprechender Anwendung der aus der DE-A 44 07 475 bekannten Vorgehensweise bei der Bestimmung der Ausblendung bzw. der Veränderung der Gemischzusammensetzung berücksichtigt, während die Steuerung der Kraftstoffzufuhr bei der Berechnung der Basiszündwinkelgrößen und der Lufteinstellung wie in Figur 2 zum Teil angedeutet (112, 116, 144) in entsprechender Anwendung der aus der DE-A 44 07 475 bekannten Vorgehensweise berücksichtigt wird.

In Figur 3 ist ein Ablaufdiagramm dargestellt, welches alternative und/oder zusätzliche Lösungen zu dem in Figur 2 dargestellten Ausführungsbeispiel zeigt. Die in Figur 3 beschriebenen Lösungen werden je nach Ausführung einzeln oder in beliebiger Kombination (auch alle zusammen) beim Gegenstand nach Figur 2 eingesetzt. Die bereits anhand Figur 2 dargestellten Elemente tragen in Figur 3 dieselben Bezugszeichen. Sie weisen dieselben Funktion auf. Bezüglich ihrer Beschreibung wird daher auf die Beschreibung der Figur 2 verwiesen.

Zunächst ist eine Verknüpfungsstelle 200 zwischen den Divisionsstellen 140 und 142 vorgesehen, in der dem Sollwert für die Stelleransteuerung ein Momentenreservewert dmrllr aufgeschaltet wird. Dieser Reservewert wird in vorbestimmten Betriebszuständen wie Leerlauf und/oder im Warmlauf während einer aktiven Katalysatorheizfunktion aus der Speicherzelle 202 bzw. nach Maßgabe von Kennfeldern, Kennlinien, Tabellen oder Berechnungsschritten abhängig von Betriebsgrößen wie z.B. Motordrehzahl, Füllung, Temperatur, etc. gebildet, wobei das Reservemoment umso größer ist, je kälter der Motor und die Abgastemperatur ist. Dadurch wird in diesen Betriebszuständen die Luftzufuhr erhöht und der Zündwinkel automatisoh in Richtung einer Wirkungsgradverschlechterung verstellt. Dabei ist die_Wirkungsgradverschlechterung durch die Zündwinkelvorsteuerung bereits berücksichtigt. Die Einbeziehung der Momentenreserve in der Verknüpfungsstelle 136 gemäß Figur 2 entfällt in dieser Ausführung.

Zur Verbesserung des Verhaltens außerhalb des Leerlaufs bei Rücknahme des Fahrpedals ist die Einbeziehung einer sogenannten Dashpot-Funktion vorgesehen. In 204 wird abhängig von der Drosselklappenstellung w_dk und der aktuell eingelegten Getriebeübersetzung Gang ein Dashpot-Moment midash gebildet nach Maßgabe eines Kennfeldes, einer Tabelle oder Berechnungsschritten, wobei das Dashpotmoment mit zunehmender Drosseklappenstellung und zunehmender Übersetzung größer wird. Dieses Moment wird dem indizierten Moment mi_kol in der Verknüpfungsstelle 136 aufgeschaltet, vorzugsweise addiert. Durch diese Maßnahme wird der Steller außerhalb des Leerlaufes mitgeführt. Geht der Fahrer vom Gas (negative Änderung der Drosselklappenstellung) wird das Dashpotmoment einer Filterung, vorzugsweise einer DT1-Filterung (differenzierend und verzögernd), unterzogen. Dadurch wird der Komfort verbessert da keine starke Motorverzögerung bzw. Wagenverzögerung mehr auftreten.

Zur weiteren Verbesserung des Betriebsverhaltens der Motorsteuerung ist vorgesehen, in der Verknüpfungsstelle 136 einen weiteren Momentenanteil mi_delta aufzuschalten, vorzugsweise zu addieren. Dieser Momentenanteil wird vom Leerlaufregler in 206 gebildet in Abhängigkeit der Abweichung der Motordrehzahl n_mot von der Solldrehzahl. Der Momentenanteil wird nur bei Unterdrehzahl gebildet, wenn die Istdrehzahl unter die Solldrehzahl fällt. Dadurch wird eine schnelle Erhöhung der Luftzufuhr und damit eine schnelle Erhöhung der Motordrehzahl erreicht und somit das Erreichen der Solldrehzahl unterstützt. In diesem Betriebszustand wirken ferner der Leerlaufregler 130 selbst sowie über die Momentenbeziehung der Zündwinkeleingriff. Insbesondere letzterer trägt mit zur schnellen Rückführung der Unterdrehzahl bei. Durch den zusätzlichen Momentenanteil wird die Notwendigkeit des Zündwinkeleingriffs reduziert und somit die Zündwinkeleingriffe stabilisiert. Auch dies wirkt sich verbessernd auf das Betriebsverhalten aus.

In einem weiteren Ausführungsbeispiel wird in vorteilhafter Weise der Eingriff des Leerlaufreglers 130 aufgespaltet in einen langsamen Teil (Signal eines 1-Anteils) und einen schnellen Teil (Signal eines P- und/oder D-Anteils). Dabei hat es sich als vorteilhaft erwiesen, daß das Signal des I-Anteils dmllr(I) bei aktivem Regler, d.h. z.B. bei geschlossener Drosselklappe, immer auf das Stellelement einwirkt. Daher wird bei abgeschalteter Logik 134 (Schalter 208 in gestrichelter Position) das Signal des 1-Anteils an der Logik 134 vorbei geführt. mi_kol wird in diesem Fall direkt durch das auf das minimale Moment mi_min in der Verknüpfungsstelle 210 aufgeschaltete (z.B. addierte) Signal dmllr (I) gebildet. Ist der schnelle Eingriff des Reglers aktiv, was in einem Ausführungsbeispiel bei Unterschreiten der Solldrehzahl durch die Istdrehzahl der Fall ist, wird der Schalter 208 in die durchgezogene Stellung geschaltet. Die Bedingung, unter der die Umschaltung erfolgt, wird in 212 beispielsweise abhängig von Istdrehzahl und Solldrehzahl überprüft. In diesem Fall ist die Logik 134 aktiv. Das um mi_min erhöhte Signal dmllr(I) führt dabei direkt zum Moment mi_kol, während das Signal des schnellen Eingriffs wie im ersten Ausführungsbeispiel behandelt wird. Insgesamt wird eine Stabilisierung des Leerlaufs und des Zündwinkeleingriffs im Leerlauf erreicht, wobei schnelle Eingriffe in die Luftzufuhr nur dann stattfinden, wenn der Zündwinkeleingriff die entstandene Momentenabweichung nicht zurückführen kann.

In einem weiteren Ausführungsbeispiel ist im Zündwinkelpfad ein weiterer Vorsteuerwirkungsgrad etakh eingefügt, der bei der Minimalwertauswahl 122 berücksichtigt wird. Dieser Vorsteuerwert wird in 214 gebildet, wenn ein Betriebszustand vorliegt (z.B. Kaltstart), bei dem eine Katalysatorheizung vorgenommen wird. Dadurch kann die Berücksichtigung dieses Betriebszustands in 120 entfallen, so daß eine einfachere Applikation des Kennfeldes 120 möglich ist. Der Vorsteuerwert etakh wird gebildet, solange die Katheizfunktion aktiv ist. Er ist in einem Ausführungsbeispiel abhängig vom Ausmaß der notwendigen Heizmaßnahmen, z.B. abhängig von der Katalysator- und/oder der Motortemperatur.

Zur einer Verbesserung der Applizierbarkeit des Kennfeldes 120 dient die Möglichkeit der Verwendung des Füllungssignals rl anstelle des Signals mi_ped zur Adressierung.

In einem vorteilhaften Ausführungsbeispiel ist vor der Koordination 108 eine Filterung 216 des Fahrerwunsches mi_fa vorgesehen. Diese Filterung dient zur Verbesserung des Fahrkomforts in bestimmten Betriebssituationen. Diese Betriebssituationen sind insbesondere Lastschlag und/oder Schubabschalten bzw. Wiedereinsetzen. Ein Lastschlag tritt bei einer Betätigung des Fahrpedals auf, insbondere wenn diese zu einem Übergang von einem schiebenden in einen ziehenden Betrieb der Brennkraftmaschine führt. Durch das Gasgeben ergibt sich eine plötzliche Änderung des Fahrerwunschmoments. Dieser Momentensprung kann negative Auswirkungen auf den Fahrkomfort haben, da wegen der Lose im Triebsstrang und deren plötzlichen Wechsel ein spürbarer Schlag im Triebsstang entsteht. Die Filterung gestaltet diesen Übergang weich, wobei das Filter in der Regel nur dann aktiv ist, wenn der entsprechende Betriebszustand (schnelle Pedalbetätigung, vorzugsweise verbunden mit einer Überschreitung der Nullmomentenkennlinie) erkannt wurde. Ein weiterer Betriebszustand, in dem diese Filterung eingesetzt wird, ist das sogenannte harte Wiedereinsetzen. Dort wird z.B. bei einer schnellen Drehzahlabnahme im Schiebebetrieb eine Zusatzkraftstoffmenge beim Wiedereinsetzen eingespritzt. In einer vorteilhaften Ausführung wird zur Lastschlagdämpfung ein PT2-Filter (Tiefpaß 2.Ordnung) eingesetzt mit einer übersetzungs- und drehzahlabhängigen Zeit- und Dämpfungskonstante, wobei diese von der Reaktion des Triebstrangs abhängig ist. Bei Schubabschalten und (normalem) Wiedereinsetzen wird ein weiteres Filter eingesetzt, welches das Moment gefiltert auf Null führt (beim Abschalten) bzw. von Null auf mi_fa (beim Wiedereinsetzen) führt. Dies hat zur Folge, daß der Zündwinkel vor der Schubabschaltung langsam nach spät, beim Wiedereinsetzen langsam wieder nach früh gesteuert wird. In einer vorteilhaften Ausführung wird ein PT1-Filter (Tiefpaß 1.Ordnung) eingesetzt. Durch diese Vorgehensweise werden Lastschläge im Triebsstrang verhindert.

Ferner ist in einem vorteilhaften Ausführungsbeispiel eine Antiruckelfunktion im Rahmen der Filterung 216 oder der Koordination 108 z.B. entsprechend dem eingangs genannten Stand der Technik vorgesehen.

In einem weiteren Ausführungsbeispiel ist vorgesehen, daß auf die Umschaltung des Schalters 106 verzichtet wird, d.h. daß das Fahrerwunschmoment ausschließlich abhängig von der Minimalwertauswahl 122 und mi_opt_11 ist. Besonders vorteilhaft ist es, einen Codeschalter vorzusehen, mit dessen Hilfe die Umschaltung projektabhängig aktiviert werden kann.

**Patentansprüche**

1. Verfahren zur Steuerung einer Brennkraftmaschine, bei welcher wenigstens der Zündwinkel der Brennkraftmaschine und ein die Luftzufuhr zur Brennkraftmaschine beeinflussendes Stellelement (50) gesteuert werden, wobei die Steuerung abhängig von Betriebsgrößen der Brennkraftmaschine und/oder externen Eingriffen im Sinne einer Einstellung eines vorgegebenen Drehmoments der Brennkraftmaschine erfolgt, **dadurch gekennzeichnet, dass** in wenigstens einem Betriebszustand ein Wirkungsgrad der Zündwinkeleinstellung bezogen auf eine optimale Einstellung im aktuellen Arbeitspunkt vorgegeben wird und der Zündwinkel zur Bereitstellung dieses Wirkungsgrades verändert wird, wobei die Zündwinkeleinstellung im Rahmen der Steuerung der Luftzufuhr im Sinne einer Aufrechterhaltung des Drehmoments der Brennkraftmaschine berücksichtigt wird.

2. Verfahren nach Anspruch 1, **dadurch gekennzeichnet, dass** außerhalb des Leerlaufs der Brennkraftmaschine der Zündwinkel nach Maßgabe eines vorgegebenen Zündwinkelwirkungsgrads bestimmt wird.

3. Verfahren nach einem der vorhergehenden Ansprüche, **dadurch gekennzeichnet, dass** ein erster Zündwinkelwirkungsgrad aus der Abweichung eines Basiszündwinkels von einem optimalen Zündwinkel im aktuellen Arbeitspunkt gebildet wird und ein zweiter Wirkungsgrad als Vorsteuerwirkungsgrad abhängig von Betriebsgrößen gebildet wird.

4. Verfahren nach einem der vorhergehenden Ansprüche, insbesondere nach Anspruch 3, **dadurch gekennzeichnet, dass** der kleinste Zündwinkelwirkungsgrad der Einstellung des Zündwinkels außerhalb des Leerlaufs zugrunde liegt.

5. Verfahren nach einem der vorhergehenden Ansprüche, **dadurch gekennzeichnet, dass** innerhalb des Leerlaufs der Zündwinkel nach Maßgabe eines aus Fahrerwunsch und Motordrehzahl unter Berücksichtigung von Minimal- und Maximalmomenten gebildeten Sollmomentenwert abgeleitet wird.

6. Verfahren nach einem der vorhergehenden Ansprüche, **dadurch gekennzeichnet, dass** die Luftzufuhr beeinflussende Stellelement (50) ein Leerlaufstellelement ist, welches einen Teil der Luftzufuhr beeinflusst.

7. Verfahren nach einem der vorhergehenden Ansprüche, **dadurch gekennzeichnet, dass** die Einstellung des die Leerlaufluft beeinflussenden Stellelements (50) nach Maßgabe des minimal notwendigen Moments, eines Eingriffsmoments eines Leerlaufreglers, einer Momentenreserve in vorbestimmten Betriebsphasen während des Leerlaufzustandes und/oder unter Berücksichtigung von Zündwinkelwirkungsgrad und/oder Gemischzusammensetzungswirkungsgrad gebildet wird.

8. Verfahren zur Steuerung einer Brennkraftmaschine, bei welcher wenigstens der Zündwinkel der Brennkraftmaschine und ein die Leerlaufluftzufuhr zur Brennkraftmaschine beeinflussendes Stellelement (50) gesteuert werden, wobei die Steuerung abhängig von Betriebsgrößen der Brennkraftmaschine und/oder externen Eingriffen im Sinne einer Einstellung eines vorgegebenen Drehmoments der Brennkraftmaschine erfolgt, wobei eine Veränderung der Lufteinstellung nur dann erfolgt, wenn die das vorgegebene Drehmoment nicht allein durch Zündwinkelverstellung bereitgestellt werden kann, **dadurch gekennzeichnet, dass** sich die Lufteinstellung nur dann ändert, wenn die Summe aus dem minimal notwendigen und dem Deltamoment des Leerlaufreglers größer ist als das Moment, das das maximal mögliche Moment beim aktuellen Arbeitspunkt darstellt, oder wenn diese Summe kleiner als das für den aktuellen Arbeitspunkt minimal einstellbare Moment ist.

9. Verfahren nach einem der vorhergehenden Ansprüche, **dadurch gekennzeichnet, dass** das Stellelement (50) ein Stellelement (50) im Umgehungskanal zur Hauptdrosselklappe (52) ist, welche über eine mechanische Verbindung (54) mit einem, vom Fahrer betätigbaren Bedienelement (56) verbunden ist.

10. Verfahren nach einem der vorhergehenden Ansprüche, **dadurch gekennzeichnet, dass** externe Eingriffe, wie Antriebsschlupfregelung, Getriebesteuerung, etc., und/oder begrenzende Eingriffe wie Drehzahlbegrenzung, Fahrgeschwindigkeitsbegrenzung, etc. zu einer Verstellung des Zündwinkels führen.

11. Verfahren nach Anspruch 7, **dadurch gekennzeichnet, dass** der Momentenreservewert während einer aktiven Katalysatorheizfunktion, gegebenenfalls abhängig von Betriebsgrößen, gebildet wird.

12. Verfahren nach einem der vorhergehenden Ansprüche, **dadurch gekennzeichnet, dass** bei Rücknahme des Fahrpedals (56) ein Dashpot-Moment gebildet wird, in dessen Abhängigkeit die Einstellung des Stellelements (50) zur Luftzufuhr beeinflusst wird.

13. Verfahren nach einem der vorhergehenden Ansprüche, **dadurch gekennzeichnet, dass** bei Unterdrehzahl ein zusätzliches Moment gebildet wird, in dessen Abhängigkeit die Einstellung des Stellelements (50) zur Luftzufuhr beeinflusst wird.

14. Verfahren nach einem der vorhergehenden Ansprüche, **dadurch gekennzeichnet, dass** der Eingriff des Leerlaufreglers (130) aufgespaltet ist in einen langsamen Teil und einen schnellen Teil, wobei das Stellelement (50) abhängig vom langsamen Anteil eingestellt wird und der schnelle Anteil nur dann auf das Stellelement (50) einwirkt, wenn das vorgegebene Drehmoment nicht allein durch Zündwinkelverstellung bereitgestellt werden kann.

15. Verfahren nach einem der vorhergehenden Ansprüche, **dadurch gekennzeichnet, dass** ein Vorsteuerwirkungsgradwert gebildet wird, wenn ein Betriebszustand vorliegt, in dem eine Katalysatorheizung vorgenommen wird.

16. Verfahren nach einem der vorhergehenden Ansprüche, **dadurch gekennzeichnet, dass** eine Filterung des Fahrerwunsches in wenigstens einem vorgegebenen Betriebszustand vorgesehen ist.

17. Vorrichtung zur Steuerung einer Brennkraftmaschine, mit einer elektronischen Steuereinheit (10), welche wenigstens den Zündwinkel und ein die Luftzufuhr zur Brennkraftmaschine beeinflussendes Stellelement (50) steuert, wobei die elektronische Steuereinheit (10) Betriebsgrößen der Brennkraftmaschine und/oder des Fahrzeugs erfasst und die Einstellung von Zündwinkel und Luftzufuhr nach Maßgabe von vorgegebenen Drehmomentenwerten durchführt, **dadurch gekennzeichnet, dass** die elektronische Steuereinheit (10) Mittel aufweist, welche in wenigstens einem Betriebszustand einen Wirkungsgrad der Zündwinkeleinstellung bezogen auf eine optimale Einstellung im aktuellen Arbeitspunkt vorgeben und den Zündwinkel zur Bereitstellung dieses Wirkungsgrades verändern, wobei die Zündwinkeleinstellung im Rahmen der Steuerung der Luftzufuhr im Sinne einer Aufrechterhaltung des Drehmoments der Brennkraftmaschine berücksichtigt wird.

18. Vorrichtung zur Steuerung einer Brennkraftmaschine, mit einer elektronischen Steuereinheit (10), welche wenigstens den Zündwinkel und ein die Leerlaufluftzufuhr zur Brennkraftmaschine beeinflussendes Stellelement (50) steuert, wobei die elektronische Steuereinheit (10) Betriebsgrößen der Brennkraftmaschine und/oder des Fahrzeugs erfasst und die Einstellung von Zündwinkel und Luftzufuhr nach Maßgabe von vorgegebenen Drehmomentenwerten durchführt, wobei die elektronische Steuereinheit (10) Mittel aufweist, welche eine Veränderung der Lufteinstellung nur dann vornehmen, wenn das vorgegebene Drehmoment nicht allein durch Zündwinkelverstellung bereitgestellt werden kann, **dadurch gekennzeichnet, dass** sich die Lufteinstellung nur dann ändert, wenn die Summe aus dem minimal notwendigen und dem Deltamoment des Leerlaufreglers größer ist als das Moment, das das maximal mögliche Moment beim aktuellen Arbeitspunkt darstellt, oder wenn diese Summe kleiner als das für den aktuellen Arbeitspunkt minimal einstellbare Moment ist.

## Claims

1. Method for controlling an internal-combustion engine, in which at least the ignition angle of the internal-combustion engine and an actuation element (50) that affects the air feed to the internal-combustion engine are controlled, the control being carried out as a function of performance quantities of the internal-combustion engine and/or external interventions with a view to adjusting a predetermined torque of the internal-combustion engine, **characterized in that**, in at least one operating state, an efficiency of the ignition-angle setting is specified in relation to an optimum setting at the current working point and the ignition angle is modidified in order to provide this efficiency, the ignition-angle setting being taken into account in the scope of controlling the air feed with a view to maintaining the torque of the internal-combustion engine.

2. Method according to Claim 1, **characterized in that** when the internal-combustion engine is not idling, the ignition angle is determined in accordance with a predetermined ignition-angle efficiency.

3. Method according to one of the preceding claims, **characterized in that** a first ignition-angle efficiency is formed from the deviation of a base ignition angle from an optimum ignition angle at the current working point, and a second efficiency is formed as a precontrol efficiency as a function of performance quantities.

4. Method according to one of the preceding claims, in particular Claim 3, **characterized in that** the setting of the ignition angle is based on the smallest ignition-angle efficiency when not idling.

5. Method according to one of the preceding claims, **characterized in that** when idling, the ignition angle is derived in accordance with a setpoint torque value formed from driver's intent and an engine speed while taking minimum and maximum torques into account.

6. Method according to one of the preceding claims, **characterized in that** the actuation element (50) that affects the air feed is an idling actuation element which affects a part of the air feed.

7. Method according to one of the preceding claims, **characterized in that** the setting of the actuation element (50) that affects the idling air is formed in accordance with the minimum necessary torque, an intervention torque of an idling regulator, a torque reserve in predetermined operating phases during the idling state and/or while taking the ignition-angle efficiency and/or the mix-composition efficiency into account.

8. Method for controlling an internal-combustion engine, in which at least the ignition angle of the internal-combustion engine and an actuation element (50) that affects the idling air feed to the internal-combustion engine are controlled, the control being carried out as a function of performance quantities of the internal-combustion engine and/or external interventions with a view to adjusting a predetermined torque of the internal-combustion engine, the air setting being modified only if the predetermined torque cannot be provided merely by altering the ignition angle, **characterized in that** the air setting is changed only when the sum of the minimum necessary torque and the delta torque of the idling regulator is greater than the torque which constitutes the maximum possible torque at the current working point, or if this sum is less than the minimum adjustable torque for the current working point.

9. Method according to one of the preceding claims, **characterized in that** the actuation element (50) is an actuation element (50) in the bypass channel at the main throttle valve (52), the latter being connected via a mechanical connection (54) to an operating element (56) that can be operated by the driver.

10. Method according to one of the preceding claims, **characterized in that** external interventions such as traction control, automatic transmission etc. and/or limiting interventions such as engine-speed limitation, vehicle-speed limitation, etc. lead to an alteration of the ignition angle.

11. Method according to Claim 7, **characterized in that** the torque reserve is formed during an active catalytic-converter heating function, optionally as a function of performance quantities.

12. Method according to one of the preceding claims, **characterized in that** a dashpot torque, as a function of which the setting of the actuation element (50) for the air feed is affected, is formed when the accelerator pedal (56) is released.

13. Method according to one of the preceding claims, **characterized in that** an extra torque, as a function of which the setting of the actuation element (50) for the air feed is affected, is formed during engine underspeed.

14. Method according to one of the preceding claims, **characterized in that** the intervention of the idling regulator (130) is divided into a slow part and a fast part, the actuation element (50) being adjusted as a function of the slow part and the fast part having an effect on the actuation element (50) only if the predetermined torque cannot be provided merely by altering the ignition angle.

15. Method according to one of the preceding claims, **characterized in that** a precontrol efficiency value is formed when there is an operating state in which catalytic-converter heating is carried out.

16. Method according to one of the preceding claims, **characterized in that** filtering of the driver's intent is provided in at least one predetermined operating state.

17. Device for controlling an internal-combustion engine, with an electronic control unit (10) which controls at least the ignition angle and an actuation element (50) that affects the air feed to the internal-combustion engine, the electronic control unit (10) recording performance quantities of the internal-combustion engine and/or of the vehicle and adjusting of the ignition angle and the air feed in accordance with predetermined torque values, **characterized in that** the electronic control unit (10) has means which, in at least one operating state, specify an efficiency of the ignition-angle setting in relation to an optimum setting at the current working point and modify the ignition angle in order to provide this efficiency, the ignition-angle setting being taken into account in the scope of controlling the air feed with a view to maintaining the torque of the internal-combustion engine.

18. Device for controlling an internal-combustion engine, with an electronic control unit (10) which controls at least the ignition angle and an actuation element (50) that affects the idling air feed to the internal-combustion engine, the electronic control unit (10) recording performance quantities of the internal-combustion engine and/or of the vehicle and adjusting of the ignition angle and the air feed in accordance with predetermined torque values, and the control unit (10) having means which modify the air setting only if the predetermined torque cannot be provided merely by altering the ignition angle, **characterized in that** the air setting is changed only when the sum of the minimum necessary torque and the delta torque of the idling regulator is greater than the torque which constitutes the maximum possible torque at the current working point, or if this sum is less than the minimum adjustable torque for the current working point.

**Revendications**

1. Procédé de commande d'un moteur à combustion interne, selon lequel on commande au moins l'angle d'allumage du moteur à combustion interne ainsi qu'un élément d'ajustage (50) influençant l'admission d'air vers le moteur à combustion interne, la commande intervenant en fonction de grandeurs de fonctionnement du moteur à combustion interne et/ou d'interventions externes pour un réglage d'un couple de rotation prédéterminé du moteur à combustion interne,

**caractérisé en ce que**

dans au moins un état de fonctionnement on prédétermine un rendement du réglage de l'angle d'allumage par rapport à un réglage optimal au point de travail actuel et l'angle d'allumage est modifié pour obtenir de ce rendement, le réglage de l'angle d'allumage étant pris en compte dans le cadre de la commande de l'application d'air pour maintenir le couple de rotation du moteur à combustion interne.

2. Procédé selon la revendication 1,
   **caractérisé en ce qu'**
   en dehors de la marche à vide du moteur à combustion interne l'angle d'allumage est déterminé en fonction d'un rendement de l'angle d'allumage prédéterminé.

3. Procédé selon l'une quelconque des revendications précédentes,
   **caractérisé en ce qu'**
   un premier rendement de l'angle d'allumage est formé de la différence d'un angle d'allumage de base par rapport à un angle d'allumage optimal au point de travail actuel, et un deuxième rendement est formé comme rendement pilote en fonction de grandeurs de fonctionnement.

4. Procédé selon l'une quelconque des revendications précédentes, notamment selon la revendication 3,
   **caractérisé en ce que**
   le réglage de l'angle d'allumage en dehors de la marche à vide est basé sur le rendement de l'angle d'allumage le plus petit.

5. Procédé selon l'une quelconque des revendications précédentes,
   **caractérisé en ce que**
   pendant la marche à vide l'angle d'allumage est déduit en fonction d'une valeur de consigne constituée d'un souhait du conducteur et de la vitesse de rotation du moteur en tenant compte de couples minimaux et maximaux.

6. Procédé selon l'une quelconque des revendications précédentes,
   **caractérisé en ce que**
   l'élément d'ajustage (50) influençant l'admission d'air est un élément d'ajustage de la marche à vide qui influence une partie de l'admission d'air.

7. Procédé selon l'une quelconque des revendications précédentes,
   **caractérisé en ce que**
   le réglage de l'élément d'ajustage (50) qui influence l'air de marche à vide est formé en fonction du couple minimum nécessaire, d'un couple d'intervention d'un régulateur de marche à vide, d'une réserve de couple dans des phases de fonctionnement prédéterminées à l'état de marche à vide et/ou en tenant compte du rendement de l'angle d'allumage et/ou du rendement de la composition du mélange.

8. Procédé de commande d'un moteur à combustion interne, selon lequel on commande au moins l'angle d'allumage du moteur à combustion et un élément d'ajustage (50) ayant une influence sur l'admission d'air de marche à vide vers le moteur à combustion interne, la commande intervenant en fonction de grandeurs de fonctionnement du moteur à combustion interne et/ou d'interventions externes pour un réglage d'un couple de rotation prédéterminé du moteur à combustion interne, une modification du réglage de l'air n'étant effectuée que si le couple de rotation prédéterminé ne peut être mis à disposition par le seul réglage de l'angle d'allumage,
   **caractérisé en ce que**
   le réglage de l'air n'est modifié que si la somme du couple minimum nécessaire et du couple delta du régulateur de marche à vide est supérieure au couple représentant le couple maximum possible au point de travail actuel, ou si cette somme est inférieure au couple minimum pouvant être réglé pour le point de travail actuel.

9. Procédé selon l'une quelconque des revendications précédentes,
   **caractérisé en ce que**
   l'élément d'ajustage (50) est un élément d'ajustage (50) situé dans le canal de contournement du clapet d'étranglement principal (52) relié par une liaison mécanique (54) à un élément d'actionnement (56) pouvant être actionné par le conducteur.

10. Procédé selon l'une quelconque des revendications précédentes,

**caractérisé en ce que**
des interventions externes telles que la régulation anti-patinage à l'accélération, la commande de la boîte de vitesse, etc. et/ou des interventions de limitation telles que la limitation de la vitesse de rotation, la limitation de la vitesse de roulement, etc. conduisent à une modification de l'angle d'allumage.

11. Procédé selon la revendication 7,
**caractérisé en ce que**
la valeur de réserve de couple est formée pendant une fonction de chauffage de catalyseur, le cas échéant en fonction de grandeurs de fonctionnement.

12. Procédé selon l'une quelconque des revendications précédentes,
**caractérisé en ce que**
lors du relâchement de la pédale d'accélération (56) un couple de « dashpot » est formé en fonction duquel le réglage de l'élément d'ajustage (50) de l'admission d'air est influencé.

13. Procédé selon l'une quelconque des revendications précédentes,
**caractérisé en ce qu'**
en présence d'une vitesse de rotation réduite un couple supplémentaire est formé en fonction duquel le réglage de l'élément d'ajustage (50) de l'admission d'air est influencé.

14. Procédé selon l'une quelconque des revendications précédentes,
**caractérisé en ce que**
l'intervention du régulateur de marche à vide (130) est divisée en une partie lente et une partie rapide, l'élément d'ajustage (50) étant réglé en fonction de la partie lente et la partie rapide n'agissant sur l'élément d'ajustage (50) que si le couple de rotation prédéterminé ne peut être mis à disposition par le seul ajustage de l'angle d'allumage.

15. Procédé selon l'une quelconque des revendications précédentes,
**caractérisé en ce qu'**
une valeur du degré du rendement de la commande pilote est formée en présence d'un état de fonctionnement dans lequel un chauffage de catalyseur est effectué.

16. Procédé selon l'une quelconque des revendications précédentes,
**caractérisé en ce qu'**
un filtrage du souhait du conducteur est prévu dans au moins un état de fonctionnement prédéterminé.

17. Dispositif de commande d'un moteur à combustion interne, comprenant une unité de commande électronique (10), qui commande au moins l'angle d'allumage et un élément d'ajustage (50) influençant l'admission d'air vers le moteur à combustion interne, l'unité de commande électronique (10) saisissant des grandeurs de fonctionnement du moteur à combustion interne et/ou du véhicule et effectuant le réglage de l'angle d'allumage et de l'admission d'air en fonction des valeurs de couple de rotation prédéterminées,
**caractérisé en ce que**
l'unité de commande électronique (10) présente des moyens qui dans au moins un état de fonctionnement déterminent un rendement du réglage de l'angle d'allumage par rapport à un réglage optimal au point de travail actuel, et qui modifient l'angle d'allumage pour obtenir ce rendement, le réglage de l'angle d'allumage étant pris en compte dans le cadre de la commande de l'admission d'air pour maintenir le couple de rotation du moteur à combustion interne.

18. Dispositif de commande d'un moteur à combustion interne, comprenant une unité de commande électronique (10), qui commande au moins l'angle d'allumage et un élément d'ajustage (50) influençant l'admission d'air de marche à vide vers le moteur à combustion interne, l'unité de commande électronique (10) saisissant des grandeurs de fonctionnement du moteur à combustion interne et/ou du véhicule et effectuant le réglage de l'angle d'allumage et de l'admission d'air en fonction des valeurs de couple de rotation prédéterminées, l'unité de commande électronique (10) présentant des moyens qui n'effectuent une modification du réglage d'air que si le couple de rotation prédéterminé ne peut être mis à disposition par le seul ajustage de l'angle d'allumage,
**caractérisé en ce que**
le réglage de l'air n'est modifié que si la somme du couple minimum nécessaire et du couple delta du régulateur de marche à vide est supérieure au couple représentant le couple maximum possible au point de travail actuel, ou si cette somme est inférieure au couple minimum pouvant être réglé pour le point de travail actuel.

Fig. 1

22 —▢— n_mot ⌐20
26 —▢— w_dk ⌐24
30 —▢— HFM ⌐28
34 —▢— λ ⌐32
40 —▢— ⌐36
42 —▢— ⌐38

12   14   16   10

18

48
46
44

50   52
54
56

EP 0 931 217 B1

13

Fig. 2

EP 0 931 217 B1

EP 0 931 217 B1

n_mot
104
n_mot  rl  λbas
128
zwbas
212
n_mot
206
dmrllr

mi_max  100
mibas
140
200
142
dmi_l_soll
146
w_dk
mi_ped
134
drllss
n_mot
210
mi_min
136
202
n_mot
208
t_mot
102
etalab
144
t_mot
I
PD
dmllr(I)
dmllr(PD)
mi_kol
λbas
wdk
Gang
204
130  n_mot
mizwmn
132
n_mot
rl

mi_ped
120
etazwvst
106
122
eta_zw_vor
etakh
124
n_mot
214
rl
116
mi_opt_l1
λsoll
zw_opt_lb
114
eta_zw_b
M
I
N
mi_fa
118
nmot
rl
126
n_mot
λbas
rl
zw_bas
zw_soll
kl
112
216
108
ASR  . . . .  GS  110

**Fig. 3**